Europäisches Patentamt

European Patent Office

Office européen des brevets

(19)

(11)  EP 1 004 039 B1

(12)  FASCICULE DE BREVET EUROPEEN

(45) Date de publication et mention
de la délivrance du brevet:
**24.09.2003  Bulletin 2003/39**

(21) Numéro de dépôt: **97933607.0**

(22) Date de dépôt: **11.08.1997**

(51) Int Cl.7: **G01T 1/22**

(86) Numéro de dépôt international:
**PCT/CH97/00295**

(87) Numéro de publication internationale:
**WO 99/008130 (18.02.1999 Gazette 1999/07)**

(54) **PROCEDE ET SYSTEME D'IMAGERIE RADIOGRAPHIQUE UTILISANT DES FAISCEAUX DE RAYONS GAMMAS ET RAYONS X**

BILDGEBENDES VERFAHREN UND SYSTEM UNTER VERWENDUNG VON GAMMA- UND RÖNTGENSTRAHLUNG

METHOD AND SYSTEM FOR RADIOGRAPHIC IMAGING USING GAMMA RAYS AND X-RAY BEAMS

(84) Etats contractants désignés:
**AT BE CH DE DK ES FI FR GB GR IE IT LI LU MC NL PT SE**

(43) Date de publication de la demande:
**31.05.2000  Bulletin 2000/22**

(73) Titulaire: **Bio-Scan S.A.**
**1217 Meyrin (CH)**

(72) Inventeur: **DIMCOVSKI, Zlatimir**
**CH-1217 Meyrin (CH)**

(74) Mandataire: **Kiliaridis, Constantin et al**
**Bugnion S.A.,**
**10, Route de Florissant,**
**Case Postale 375**
**1211 Genève 12 (CH)**

(56) Documents cités:
FR-A- 2 068 752          US-A- 4 851 687

• D.J. FEGAN ET AL: "Fast large aperture camera and data acquisition system with applications in astrophysics, particle physics and nuclear medicine" NUCLEAR INSTRUMENTS & METHODS IN PHYSICS RESEARCH., vol. 211, no. 1, juin 1983, AMSTERDAM NL, pages 179-191, XP002063810
• DATABASE WPI Section EI, Week 8432 Derwent Publications Ltd., London, GB; Class S03, AN 84-199421 XP002063819 & SU 416 648 A (NUCLEAR RES INST)

## Description

L'invention concerne un nouveau procédé pour détecter et analyser l'interaction des rayons gammas et rayons X, notamment de hautes énergies, dénommés dans la pratique rayons X durs, avec un objet ou un patient (cible à étudier, dans la suite).

Elle concerne également un système radiographique, permettant de restituer en temps réel l'image détectée d'un objet ou d'un élément radiographié, dont la source incidente est constituée par des photons gammas ou des rayons X durs, mettant donc en oeuvre le détecteur en question.

La mise en oeuvre des rayons γ et des rayons X durs, dont l'énergie est typiquement supérieure à une centaine de kiloélectronVolts (keV), pour étudier la structure interne d'objets matériels ou, dans le cadre de la radiothérapie, notamment pour le traitement des cancers, est aujourd'hui largement développée. Cependant, la difficulté d'obtention d'images de qualité. susceptible d'être correctement interprétées est importante, notamment par rapport aux techniques radiographiques traditionnelles mettant en oeuvre de faible énergies.

Ces difficultés sont non seulement inhérentes au coefficient d'absorption plus faible des rayons γ, mais proviennent également des différents phénomènes d'interaction mis en jeu. En effet, lorsqu'un faisceau de rayons X ou γ pénètre dans un milieu matériel, il se produit un phénomène d'atténuation de l'énergie des photons incidents consécutif à l'interaction entre les photons et le milieu traversé.

Cette interaction peut intervenir soit avec un électron du milieu, soit avec un noyau des atomes constitutifs dudit milieu. On distingue parmi les interactions avec les électrons, d'une part l'effet Compton, c'est à dire l'éjection de l'électron qui a fait l'objet de l'interaction et la création d'un photon diffuse, et d'autre part, l'effet photoélectrique, c'est à dire l'éjection d'un électron orbital sous l'action de l'énergie transférée par le photon incident. L'effet photoélectrique est dominant pour des énergies des photons incidents allant jusqu'à une centaine de keV. Au delà de ce seuil, l'effet photoélectrique diminue au profit de l'effet Compton.

L'interaction avec les noyaux donne lieu à la création de paires électron-positon, cet effet devenant prépondérant devant l'effet Compton au delà des énergies de l'ordre de 5 - 10 MeV selon le numéro atomique de la matière traversée.

Le faible coefficient d'absorption doublé du fait que cette grandeur, spécifique à chacun des éléments atomiques, devient très peu différenciée pour lesdits éléments dès lors que l'énergie des photons incidents atteint environ 1 MeV, conduit à une réduction significative du contraste, limite l'efficacité des détecteurs de ces rayons intégrés au sein des installations radiographiques, et limite sérieusement la qualité des images recueillies.

De plus, des électrons fortement énergétiques et de photons secondaires à haute énergie interagissent avec le volume expérimental, nécessitant de fait la mise en oeuvre de barrieres plus importantes contre ces effets secondaires, constituant autant de sources de particules affectant le signal détecté, notamment son contraste et limitant la résolution en termes de position au sein de l'image résultante.

Dans le cadre de la radiographie industrielle, des rayons X de haute énergie sont utilisés pour radiographier des objets relativement denses, afin par exemple d'effectuer des contrôles non destructifs des constructions réalisées en acier, de procéder à des vérifications de soudure, etc.... L'imagerie par rayons X permet également d'aboutir à des informations sur la structure interne de l'objet.

De tels rayons X, situés dans la même gamme d'énergie, sont également utilisés pour la radiothérapie, dans le cadre du traitement de tumeurs malignes. Dans ce cas, ces radiations sont utilisées afin de modifier la structure biologique de tissus vivants et notamment afin de les détruire. L'image radiographique du patient irradié permet à l'opérateur d'améliorer le positionnement dudit patient, et de mieux régler les diaphragmes de collimation afin d'aboutir à un traitement de meilleure qualité et surtout de diminuer les risques de lésion des tissus sains en diminuant au maximum la dose délivrée pendant le contrôle de positionnement.

L'imagerie radiographique mettant en oeuvre des rayons X de telles énergies, c'est à dire supérieure à 500 keV, s'avère difficile à mettre au point, compte-tenu de la faible section efficace de l'interaction des photons avec la matière. De fait, on obtient généralement des images à faible contraste compte-tenu de la faible dépendance du coefficient d'atténuation du photon avec le numéro atomique, de sorte que des régions constituées par des éléments différents sont difficilement distinguées. Afin d'améliorer la qualité des images, il s'avère donc nécessaire d'acquérir un échantillon important de photons détectés au niveau du détecteur. Ainsi, deux possibilités s'offrent à cette fin. La première est d'augmenter la dose de radiations délivrées à l'objet. La seconde consiste à maximaliser l'efficacité de détection des photons au niveau du détecteur.

Si la première de ces possibilités peut tout à fait être envisagée dans le cadre de l'analyse d'objets statiques, notamment au niveau industriel, tel n'est sûrement pas le cas au niveau des traitements radiothérapiques, pour lesquels, la dose délivrée doit être strictement contrôlée pour des raisons évidentes de sécurité.

Un autre facteur important réduisant la qualité des images radiographiques lorsque des photons de haute énergie sont utilisés est dû à l'importante fraction de photons qui proviennent non pas de la source principale de photons, mais qui sont des photons secondaires créés par des interactions de type Compton ou rayonnement de freinage, intervenant tant au niveau de la matière entourant l'objet irradié, de l'objet irradié lui même, qu'à celui des organes de collimation, ou encore au niveau du détecteur lui-même.

Enfin, un autre facteur contribuant à la difficulté d'obtention des images de bonne qualité est relatif à la faible section efficace de l'interaction des photons à hautes énergies, pour lesquels seule une faible fraction des photons traversant l'objet à analyser contribue à l'image.

L'un des objets de l'invention vise à optimiser l'efficacité de la détection des photons primaires au niveau du détecteur. Pour ce faire, elle vise à ne sélectionner que la détection de la partie du spectre des photons primaires ou directes par la mise en place d'un seuil, et ainsi minimiser la contribution au signal inhérente aux photons secondaires ou diffus.

Un tel détecteur à rayons gammas ou rayons X est placé derrière l'objet ou le patient à radiographier. Dans le cadre de la radiographie industrielle, il doit être en mesure de fournir une image de la structure interne de la partie irradiée de l'objet avec un maximum de précision et de contraste. Dans le cadre de la radiothérapie, il doit fournir une image de qualité suffisante avec une dose de radiation minimum.

Parmi ces détecteurs, on connaît les films portables constitués d'un film sensible aux rayons X placés en sandwich entre deux plaques métalliques. Malgré une bonne efficacité a basse énergie et une bonne résolution spatiale, un tel système souffre d'un contraste médiocre.

Par ailleurs et surtout, l'usage de tels films rend impossible l'obtention d'images en temps réel ou en quasi temps réel, ce qui s'avère de plus en plus indispensable dans le cadre de la radiothérapie.

Il est donc apparu nécessaire de développer un dispositif d'imagerie électronique de contrôle, mieux connus sous l'expression en langue anglaise *Electronic Portal Imaging Devices (EPID)*, notamment en ligne, susceptible de délivrer une image en temps réel à contraste élevé à partir d'une faible dose délivrée au patient.

On a ainsi proposé des systèmes vidéo à miroir avec des écrans phosphorescents. De tels systèmes consistent en une plaque métallique revêtue d'un écran au phosphore fluorescent, ledit écran étant visualisé par une caméra vidéo par l'intermédiaire d'un miroir incliné à 45 degrés. L'interaction des rayons X dans la plaque de métal crée des électrons de haute énergie par effets photoélectriques, effet Compton et création de paires, et induit la fluorescence au sein de l'écran.

Si un tel système développe une bonne résolution spatiale, en revanche, il souffre d'un faible contraste et une dose élevée est souvent nécessaire pour l'obtention d'une image lisible. Par ailleurs, de tels systèmes font l'objet d'un vieillissement important et relativement rapide, générant un encombrement massif et une technologie coûteuse.

Se sont alors développés des chambres à liquide d'ionisation. La chambre d'ionisation est composée d'une matrice à fils composée de deux surfaces parallèles de fils, typiquement de 256 fils pour chaque surface. Les 256 électrodes dans un sens servent de signal et chacune des électrodes est connectée à un détecteur de très faible courant (picoampère). Les 256 autres électrodes fonctionnent comme électrodes à fils à haute tension et sont reliées à un commutateur de tension. Entre les deux surfaces se trouvent le liquide d'ionisation. Le signal provient de l'ionisation sous forme de paires électron-ion du liquide et son amplitude est proportionnelle à l'énergie déposée par les particules ionisées dans le milieu pendant la durée d'intégration du circuit électronique de lecture.

De fait, pour obtenir une image, la matrice est balayée ligne par ligne en commutant successivement la tension sur chaque électrode.

Si le dispositif résultant s'avère peut encombrant, et de sensibilité relativement acceptable, on note néanmoins des difficultés de calibration pour la matrice et une pureté du liquide organique souvent difficile à obtenir. Par ailleurs et surtout, le faible contraste ne permet pas d'obtenir des images de très grande qualité.

Se sont également développés des systèmes se présentant sous l'état solide tels que notamment des détecteurs au silicium. De tels détecteurs peuvent être constitués d'une barrette linéaire de 255 diodes au silicium, installée immédiatement après une plaque de plomb d'environ un millimètre d'épaisseur, chaque diode de silicium détectant les électrons de haute énergie créés par les rayons X interagissant avec la plaque de plomb, et pénétrant dans le volume sensible. Les charges ionisées dans la couche deplétée de charges du silicium sont amplifiées et numérisées au moyen d'un convertisseur analogique - numérique.

De tels détecteurs nécessitent de manière générale des doses importantes pour aboutir à des images de contraste de qualité suffisante et les durées totales de vérification des champs sont de manière générale plus importantes que les dispositifs d'imagerie bi-dimensionnelle.

Enfin, les récents développements dans le domaine des sciences des matériaux et dans la technologie du silicium amorphe hydrogéné (a - Si. H) ont permis d'augmenter la résolution pixélaire des détecteurs bi-dimensionnels photosensibles de grandes dimensions. Une telle matrice a - Si. H est positionnée immédiatement après un complexe plaque métallique - écran phosphorescent, ces deux composants remplissant des fonctions identiques à celles remplies dans le cadre des systèmes à caméra-fluoroscopiques En fait, la matrice a - Si . H sert de substituant pour le miroir, de l'objectif et de la caméra, ou pour l'extrémité d'un faisceau de fibres optiques, dans les systèmes classiques. Par rapport aux autres systèmes optiques, l'avantage à utiliser une barrette de photodiodes positionnée à proximité de l'écran phosphorescent réside dans le fait qu'une importante proportion de la lumière émise peut être captée et convertie en signal .En revanche, un tel système présente l'inconvénient d'exposer des cartes électroniques d'amplification très sensibles, directement intégrées au sein de la barrette, pendant les périodes de vérification en radiothérapie, à des flux intenses de rayons X durs, susceptibles d'induire des fluctuations du signal, et des dommages des canaux électroniques inhérents aux radiations.

La présente invention a donc pour objet de proposer d'une part un procédé, d'autre part, un système d'imagerie radiographique en temps réel, permettant de discriminer les radiations ionisantes de faible énergie, et correspondant pour partie au moins aux radiations de dispersion, et ainsi éliminer leur participation à l'image détectée, de sorte à augmenter le contraste, et ce pour des doses relativement réduites de radiations incidentes.

De la même manière, l'invention a également pour but d'améliorer le rapport signal/bruit, et également la résolution de position de l'image ainsi acquise.

Le procédé de l'invention, et le fonctionnement du détecteur et du système le mettant en oeuvre sont basés sur le principe du seuil d'émission lumineuse de type Cerenkov, apparaissant lorsque les particules chargées générées par l'interaction photons - matière traversent un milieu dispersant déterminé. Des détecteurs Cerenkov ont déjà été utilisés dans d'autres domaines de la technique, comme dans les réacteurs nucléaires (voir FR-A-2068752) et pour la détection d'explosifs dans des bagages (voir US-A-4851687).

Ce procédé pour détecter et analyser l'interaction des rayons gammas et de rayons X avec un objet, consiste à positionner après ledit objet soumis à l'irradiation des rayons incidents un premier matériau susceptible d'émettre, sous l'action du rayonnement émergent dudit objet, des particules chargées de hautes énergies, puis, à interposer sur le trajet desdites particules, un second matériau, susceptible d'émettre après interaction avec lesdites particules un rayonnement Cerenkov, l'indice de réfraction dudit second matériau étant sélectionné de telle sorte à ne permettre l'émission Cerenkov que pour un seuil énergétique déterminé desdites particules chargées, donc des rayons émergents, l'émission Cerenkov étant détectée au moyen d'un détecteur de photons.

De la sorte, compte tenu du fait que l'émission Cerenkov n'intervient que pour un seuil d'énergie déterminé, il devient possible d'opérer une sélection par bandes d'énergie. De fait, on peut s'affranchir du "bruit" provenant par exemple des rayons gammas dispersés de faibles énergies.

Le détecteur de rayons gammas et de rayons X incidents est constitué :

- d'un convertisseur desdits rayons incidents en électrons à forte énergie, créés par les phénomènes de créations de paires et Compton ;
- d'un émetteur de photons par effet Cerenkov sous l'action des électrons énergétiques provenant du convertisseur, ledit émetteur étant accolé au convertisseur ;
- d'un organe de détection sensible aux photons ainsi créés et susceptible de restituer spatialement la densité d'émission des photons Cerenkov provenant de l'émetteur Cerenkov.

Avantageusement, on interpose entre l'émetteur de photons Cerenkov et l'organe de détection une couche d'un matériau destiné à décaler la longueur d'onde des photons Cerenkov ainsi émis dans le domaine du visible.

Par exemple, le convertisseur est constitué d'un matériau à nombre de masse élevé, choisi dans le groupe comprenant le tungstène, le plomb, le cuivre, seul ou sous forme d'alliage.

L'épaisseur de ce convertisseur est avantageusement comprise entre 0,1 et 20 millimètres dans les plupart des cas.

L'émetteur Cerenkov a typiquement un indice de réfraction compris entre 1 et 2. Il est constitué d'un matériau optiquement transparent , se présentant sous la forme d'un cristal, d'un solide amorphe et d'un liquide. Il est par exemple réalisé en fluorure de calcium, fluorure de sodium, fluorure de lithium, fluorure de magnésium, voire en silice naturelle ou synthétique ou en aérogels de silice. A l'état liquide, il peut être constitué par de l'eau, voire par du fréon.

Le système de détection est avantageusement constitué d'une caméra a dispositif de transfert de charge (CCD) munie ou non d'un dispositif d'intensification de l'image, voire d'un dispositif de refroidissement du capteur CCD. Cette caméra est couplée optiquement par le biais d'un miroir et d'un objectif soit directement à l'émetteur Cerenkov, soit au décaleur de longueur d'onde. Ce couplage peut aussi être fait par le biais d'un faisceau de fibres optiques.

Le système de détection peut également être constitué par une matrice d'éléments photosensibles du type silicium hydrogéné amorphe bi-dimensionnel.

Le décaleur en longueur d'onde est avantageusement constitué d'une couche de salicilate de sodium d'épaisseur comprise entre 10 nanomètres et 500 micromètres, revêtue sur la face de sortie de l'émetteur Cerenkov. Il peut également être choisi dans le groupe comprenant le salicilate de sodium, le p - Terphenyl, le diphenyl-oxazole (PPO), le tétraphenylbutadiène (TPB), le p - quaterphenyl (PQ), le diphenylstilbène (DPS), le trans stilbène (TS), le diphenylbutadiène (DPB), le phenylène phenyloxazote (POPOP), le Bis (2-methylstyryl) benzène (Bis-MSB), le benzimidazo-benziso-quinoline (BBQ).

Il va être brièvement rappelé ci-après le principe de l'émission Cerenkov

Une particule chargée se déplaçant à une vitesse $v = \beta c$ (où $\beta$ représente le nombre d'unités de vitesse de la lumière $c$ dans le vide), dans un milieu optique d'indice de réfraction n, émet des photons appelés photons Cerenkov lorsque la vitesse ν excède la vitesse de la lumière dans le milieu, c'est à dire lorsque ν > c/n, ou lorsque

$$\beta > 1/n.$$

L'angle d'émission polaire Cerenkov θ par rapport à la direction de la particule incidente est donnée par la relation

$$\cos \theta = \frac{1}{N\beta}$$

Une majorité de photons est émis dans des longueurs d'onde du proche ultra-violet.

La manière dont l'invention peut être réalisée et les avantages qui en découlent ressortiront mieux de l'exemple de réalisation qui suit donné à titre indicatif et non limitatif à l'appui des figures annexées.

La figure 1 est une représentation schématique d'un détecteur de contrôle en ligne intégré au sein d'un système de radiographie en temps réel conforme à l'invention.

La figure 2 est une représentation schématique du détecteur utilisé dans le système d'imagerie conforme à l'invention.

La figure 3 est une représentation schématique en section transversale d'une première forme de réalisation de l'émetteur Cerenkov entrant dans la constitution du détecteur dont la figure 4 est une vue de détail.

La figure 5 est une représentation analogue à la figure 3 d'une autre forme de réalisation du détecteur utilisé dans le système d'imagérie selon l'invention.

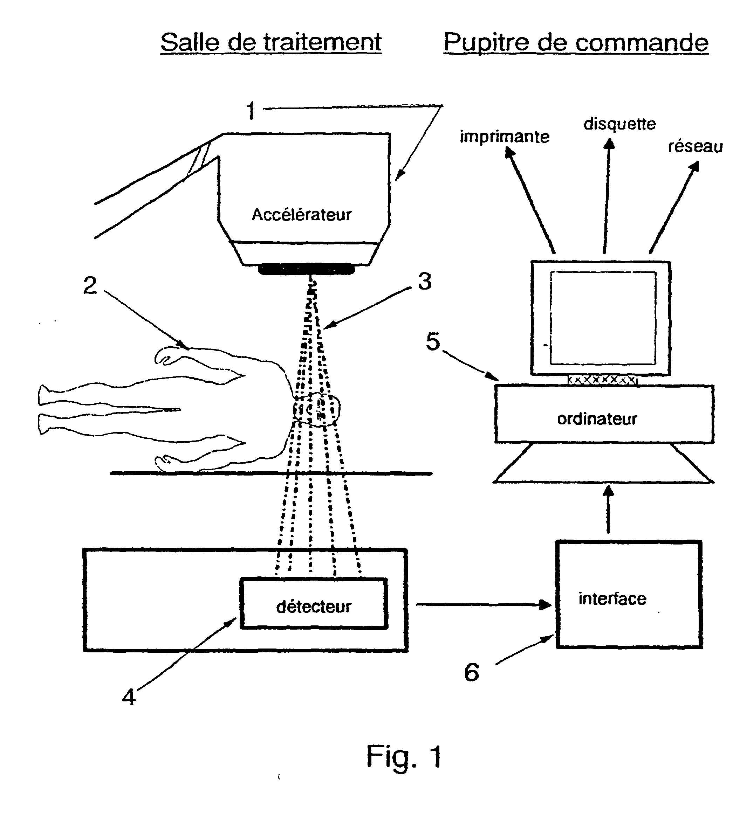

On a représenté sur la figure 1 un système radiographique plus particulièrement destinée à la radiothérapie. Elle est fondamentalement constituée d'un accélérateur ( 1 ) émettant un faisceau collimaté (3) de photons et notamment de rayons X en direction d'un patient allongé (2) Le patient est positionné de telle sorte à permettre de localiser au mieux possible, outre l'impact de ce faisceau collimaté de rayons X, également sa profondeur de pénétration, et la localisation du dépôt majoritaire de la dose à délivrer. Pour ce faire, l'installation comprend un détecteur (4) conforme à l'invention, situé de manière sous-jacente, et dont l'interprétation des signaux détectés est gérée par un micro-ordinateur (5), après interfaçage (6), afin de disposer en temps réel d'une image correspondante, immédiatement interprétable.

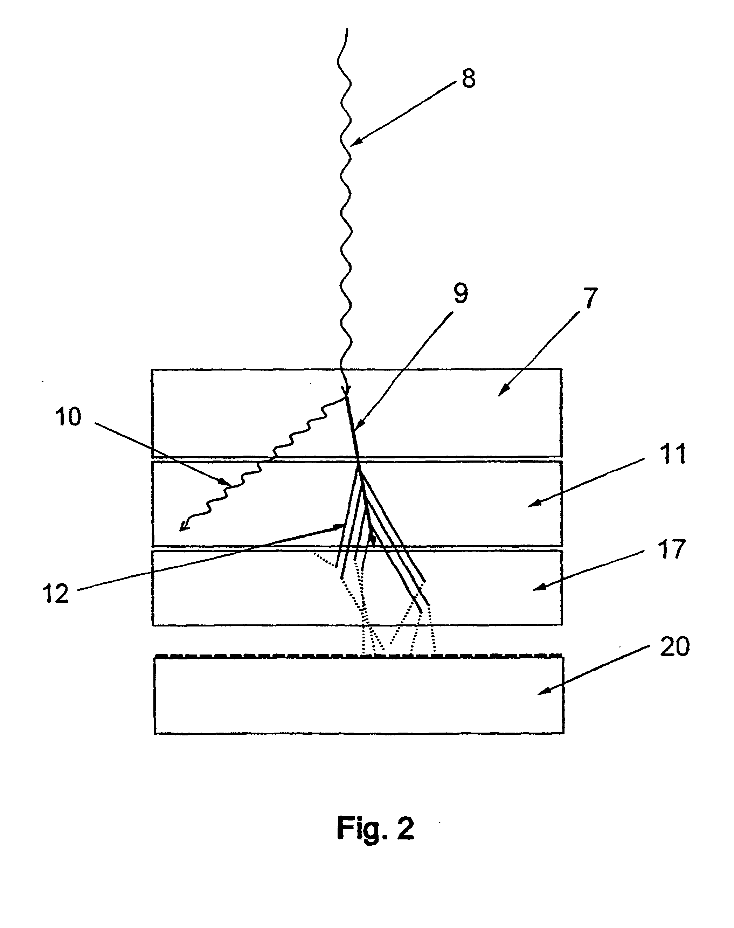

Le détecteur spécifique est décrit plus en détail en liaison avec la figure 2. Selon l'invention, ce détecteur comporte tout d'abord un convertisseur (7), typiquement constitué d'une plaque de plomb, de tungstène ou de cuivre, voire en un alliage à base de ces éléments, en tout état de cause à base d'éléments de nombre atomique et de masse élevé, de telle sorte à transformer les photons incidents (8) en électrons très énergiques (9), soit selon l'effet Compton soit selon l'effet de création de paires. On a par ailleurs représenté l'émission d'un photon secondaire (10) qui apparaît dès lors que l'effet Compton est mis en jeu.

Ce convertisseur (7) est immédiatement suivi, étant accolé, par un émetteur (11) de photons Cerenkov, dont on a représenté le faisceau divergent (12) selon l'angle θ à partir de la direction incidente des électrons énergétique secondaires (9), et qui signe, compte tenu de l'indice de réfraction du milieu mis en oeuvre, le type de particules et leur énergie.

Cet émetteur de photons Cerenkov (11) est soit constitué d'un solide amorphe tel que par exemple un fluorure de calcium, de sodium, de lithium ou de magnésium, voire en quartz ou en aérogel de silice (n (SiO$_2$) + 2n (H$_2$O), soit encore d'un matériau liquide et notamment de l'eau ou du Fréon.

Dans un cas comme dans l'autre, on met en oeuvre un matériau présentant un indice de réfraction supérieur à 1, et par exemple compris entre un et deux. Cet émetteur Cerenkov est transparent à la lumière. Selon une caractéristique de l'invention, le matériau constitutif de l'émetteur Cerenkov ne peut pas scintiller lorsqu'il est exposé aux radiations ionisantes.

La structure de l'émetteur Cerenkov peut être de différentes natures.

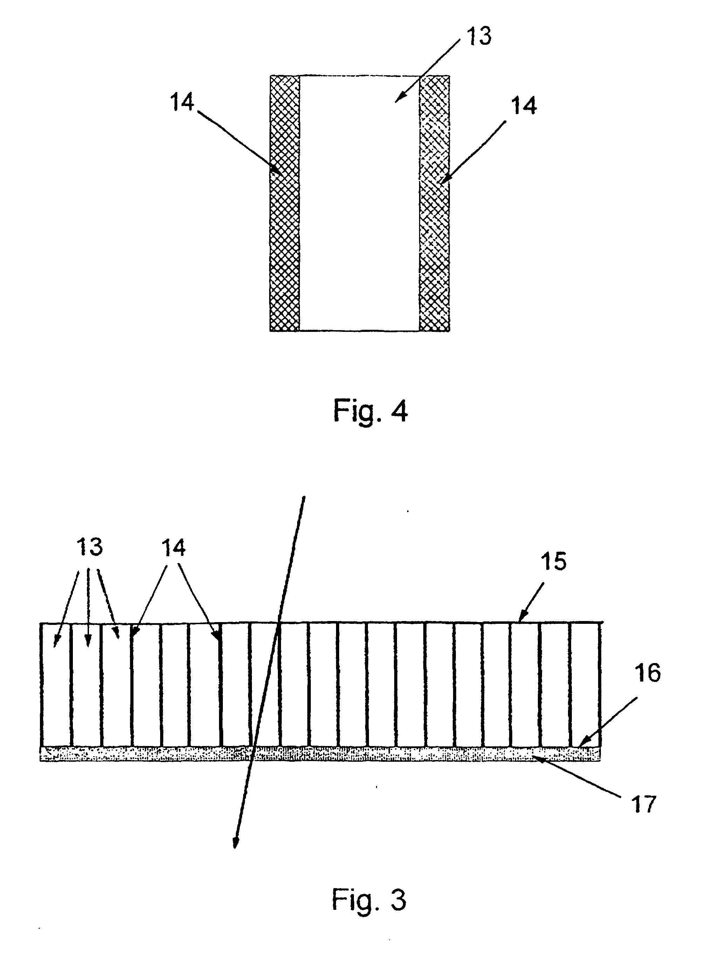

Dans une première forme de réalisation, représentée en liaison avec les figures 3 et 4, l'émetteur Cerenkov est constitué d'un faisceau de fibres optiques parallèles (13) (par exemple réalisées en quartz synthétique), séparées optiquement et noyée chacune dans une fine couche d'un matériau métallique lourd (14). Cette fine couche périphérique de métal lourd permet d'augmenter avantageusement l'efficacité de la détection.

Bien que constitué de fibres optiques accolées, l'émetteur Cerenkov demeure sous la forme d'une plaque, les deux faces principales (15, 16) de la plaque étant constituées par les extrémités desdites fibres optiques, collées les unes aux autres, afin de constituer une structure rigide et uniforme. L'épaisseur de cette plaque est donc définie par la longueur des fibres optiques. En outre, les fibres optiques sont orientées perpendiculairement à la direction incidente principale des photons à détecter.

La lumière Cerenkov émise pendant le passage d'une particule à travers une fibre est confinée à l'intérieur de celle-ci et la diffusion de cette lumière sur la surface postérieure de l'émetteur correspond au diamètre de cette fibre. Une particule traversant plusieurs fibres ne laisse donc de traces que dans les fibres traversées. De fait, dans cette forme de réalisation, la résolution de la position dépend du diamètre des fibres et de la dispersion angulaire des électrons et positons entrant l'émetteur Cerenkov ainsi constitué. Cela permet donc d'aboutir à un signe lumineux intense en sortie avec une dispersion faible dans le volume de l'émetteur.

Bien entendu, la section des fibres optiques constitutives de cet émetteur peut être quelconque, notamment circulaire, rectangulaire, carrée, etc.

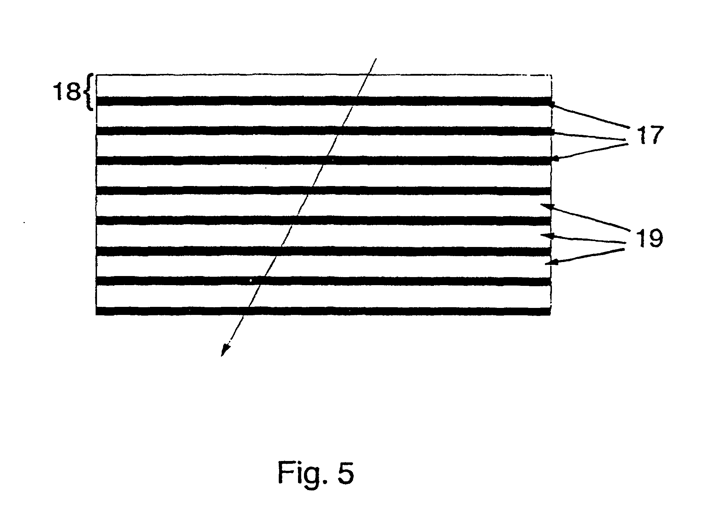

Dans une seconde forme de réalisation de l'invention, l'émetteur Cerenkov (11) peut être constitué d'une simple plaque. Celle-ci peut être revêtue sur sa surface avale d'une couche constitutive d'un décaleur en longueur d'onde (17), tel qu'il sera décrit plus en détail ultérieurement. Cette structure unitaire peut être répliquée un certain nombre de fois, jusqu'à obtenir un émetteur multi-couches, ainsi que représenté sur la figure 5. Chacune des couches (18) est constituée d'une plaque (19) susceptible d'émettre des photons Cerenkov sous l'action d'électrons ou de positons, et est par exemple réalisée en quartz synthétique. Entre chaque plaque est prise en sandwich une couche de décaleur en longueur d'onde (17), une telle couche revêtant également la face avale de l'empilement ainsi constitué

Chacune des structures unitaires (18), c'est à dire plaque unitaire - couche de décaleur en longueur d'onde émet un signal indépendant, le décaleur en longueur d'onde étant transparent à sa propre fluorescence.

Lorsqu'une particule traverse toute l'épaisseur de l'empilement constitutif de l'émetteur Cerenkov, le signal résultant est égal à la somme des signaux émis par chacun des entités plaque émettrice - couche décaleur. De la sorte, l'amplitude du signal correspond à la lumière émise dans une plaque émettrice d'épaisseur égale à la somme des épaisseurs des plaques unitaires constitutives de l'empilement.

De fait en ayant recours à un empilement des plusieurs émetteurs unitaires. on réduit la taille du spot final, et de fait, on augmente la résolution spatiale.

Typiquement, l'épaisseur de l'émetteur Cerenkov est comprise entre 0, 1 mm et 20 mm.

Le seuil d'émission Cerenkov est donné par l'indice de réfraction n du milieu. De fait, on ne peut détecter que des particules chargées de masse donnée avec une énergie supérieure à un certain seuil. Dans le cadre des rayons X, les particules à détecter sont soit constituées par des électrons soit par des positons de sorte que la masse est fixée. En appliquant un seuil à l'énergie des électrons et positons, on applique de fait un seuil à l'énergie des rayons X détectés. De la sorte, on s'affranchit en sortie de détecteur de tous les rayons X d'énergie inférieure, dont il a été précédemment indiqué qu'ils nuisaient au contraste de l'image résultante.

Selon une caractéristique avantageuse de l'invention, et ainsi que déjà précisé, le détecteur comporte un décaleur en longueurs d'onde (17), immédiatement accolé à l'émetteur Cerenkov (11). Ce décaleur en longueur d'onde est destiné à décaler la longueur d'onde des photons Cerenkov émis vers le domaine du visible. En effet, ainsi que déjà précisé, le spectre de l'émission Cerenkov se situe généralement à de faibles longueurs d'onde typiquement dans le proche ultraviolet. Afin d'optimiser l'efficacité de la détection par le module de lecture, on met donc en place immédiatement en sortie de l'émetteur Cerenkov une fine couche d'une substance émettant des photons dans le domaine du visible, à partir de photons ultraviolets. Avec un tel matériau, il est possible d'aboutir à la conversion des photons de ultraviolet dans le visible proche de 100 %.

Cette couche est avantageusement réalisée en silicilate de sodium, votre en p- Terphényl, ou encore d'un mélange de composés organiques. Elle est déposée sur la face de sortie de l'émetteur Cerenkov, ou sur la face avale des structures unitaires qui le constituent. Elle est d'une épaisseur typique comprise entre 10 nanomètres et 500 micromètres

Enfin, le détecteur comporte un dispositif de lecture photosensible et susceptible également de définir le point d'impact (20), c'est à dire de restituer une résolution spatiale. Différentes alternatives sont possibles en fonction de la spécificité de mesures radiographiques.

On peut ainsi utiliser une caméra à dispositif à transfert de charges (CCD), éventuellement associée à un amplificateur d'images. La caméra est couplée au décaleur en longueur d'onde ou à l'émetteur Cerenkov, soit par le biais d'un miroir et d'un objectif, soit par l'intermédiaire d'un faisceau de fibres optiques.

Cette utilisation d'une caméra CCD dans le cadre de la détection est largement décrite dans la publication N.A Baily, R.A Horn et T.D. Kampp . "Fluoroscopic visualisation of megavoltage therapeutic X-rays beams" Int. J Radiat. Oncol. Biol. Phys. 6, 935-939 (1980) ou J.W. Wong, WR Binns, A.Y Cheng, LY Gear, J.W. Epstein, H. Klarmann et J.A. Purdy "On-line radiotherapy imaging with an array of fiber-optic image reducers" Int. J Radiat. Oncol. Biol. Phys 18, 1477-1487 (1990).

Dans une autre forme de réalisation, on peut remplacer la caméra CCD par une matrice d'éléments photosensibles, telle que du silicium hydrogéne amorphe se présentant sous la forme de barrettes sensorielles bidimensionnelles, couplées également directement soit au décaleur en longueur d'onde, soit à l'émetteur Cerenkov. Une telle technique de détection lumineuse est par exemple décrite dans la publication L.E. Antonuk, J. Boudry, W Huang. D.L McShan, E.J Morton, J Longo et R.A. Street : "Démonstration of megavoltage and diagnostic X-ray imaging with hydrogenated amorphous silicon array" Med. Phys. **19**(6), 1992 p 1455.

La mise en oeuvre de ce détecteur au sein de dispositifs d'imagerie radiographique permet tout d'abord d'aboutir à des images obtenues en temps réel, présentant un contraste très nettement amélioré, compte tenu de l'effet de seuil généré par l'effet Cerenkov.

Pour la même raison, le rapport signal/bruit est également sensiblement augmenté.

Dans le cadre de la radiothérapie, le détecteur - objet de l'invention permet de plus de réduire significativement les doses de radiation délivrées, compte tenu de la plus grande facilité offerte en termes de positionnement du patient, cette facilité étant en outre amplifiée par l'obtention en temps réel des images détectées.

Il va être succinctement décrit ci-après le principe de fonctionnement de l'installation mettant en oeuvre outre le détecteur, également un dispositif de lecture à caméra CCD.

De manière connue, la cible du faisceau d'électrons monoénergétique émergeant de l'accélérateur linéaire émet un flux de rayons X durs, dont le spectre en énergie correspond au rayonnement de freinage émis par les métaux lourds constitutifs de ladite cible soumis à l'action desdits électrons. L'énergie maximum des rayons X est très proche de l'énergie des électrons issus de l'accélérateur. Par ailleurs, les dimensions du volume de la source de rayons X est égale au diamètre du faisceau d'électrons et de l'épaisseur de la cible.

Les rayons X divergents émis par la cible présentent un spectre en énergie relativement large et atteignent l'objet à analyser ou le patient à traiter, placé à une certaine distance de cette source, et typiquement 1 mètre. On observe alors deux effets les rayons X primaires sont atténués et l'interaction des photons primaires avec ledit objet produit une radiation dispersée. L'intensité de la radiation dispersée après avoir traversé l'objet peut être plus élevée que celle des photons incidents pour des objets épais et lourds

Les composantes de faibles énergies de la radiation primaire sont fortement atténuées lorsqu'elles traversent l'objet. Au contraire, le spectre de la radiation secondaire, c'est à dire dispersée est concentré autour des faibles énergies. De fait, on observe après l'objet à analyser ou le patient à traiter deux composantes principales bien séparées en dessous d'un niveau voisin de 1MeV. la quantité de radiations dispersées est plus importante que celle des rayons X primaires. et au dessus de ce niveau, la radiation primaire prédomine

Le pouvoir d'atténuation locale du faisceau primaire est susceptible de donner des informations quant à la structure interne de l'objet par radiologie en transmission. Les radiations dispersées ne fournissent aucune information sur la structure de l'objet, mais contribuent à la réalisation d'images dans le cadre des techniques d'imagerie par films ou par écran luminescent. De fait, elles augmentent le bruit et affectent la résolution en termes de position ainsi que le contraste Ainsi, l'augmentation de la qualité des images passe par une diminution de la contribution des radiations dispersées ou secondaires

Dans le système de l'invention, le détecteur est positionné à une certaine distance de l'objet à analyser ou du patient à traiter. Les radiations issues dudit objet ou dudit patient interagissent avec le convertisseur, émettant alors des électrons Compton et des paires électrons/positons. Les particules chargées d'énergie supérieure au seuil fixé par l'indice de réfraction de l'émetteur Cerenkov adjacent au convertisseur produisent de la lumière Cerenkov. Compte tenu du fait que l'énergie desdites particules chargées est corrélée avec l'énergie des photons incidents leur ayant donné naissance, la fixation d'un seuil d'énergie des particules chargées entraîne la fixation d'un seuil des rayons X incidents. Dans la pratique, le seuil en énergie de détection des rayons X est légèrement supérieur à celui des particules chargés, et notamment des électrons.

Ainsi, en sélectionnant un matériau approprié pour l'émetteur Cerenkov, la bande de faible énergie des radiations issues de l'objet à analyser ou du patient à traiter devient indétectable, éliminant de fait la contribution des radiations dispersées (ou secondaires) à la réalisation des images, et avec quasiment aucun effet sur les radiations primaires.

La distribution de la densité des photons au niveau du plan de détection correspond à la distribution de l'atténuation de ceux-ci au sein de l'objet à analyser ou du patient à traiter. Ainsi, la détection de la distribution en densité des photons primaires permet d'aboutir à une image de la structure interne dudit objet ou dudit patient.

De la même manière, la quantité d'émission locale de lumière Cerenkov est proportionnelle au nombre de photons gammas atteignant l'émetteur Cerenkov. De la sorte, la distribution de la densité de surface de lumière Cerenkov émise par l'émetteur permet de restituer une image de la structure interne de l'objet ou du patient exposé aux dites radiations.

Cette image est préservée après la conversion du spectre Cerenkov par le décaleur en longueur d'onde Afin d'enregistrer et de stocker l'image radiographique obtenue, il convient de détecter la distribution de densité de la lumière émise par le décaleur. A cet effet, on met en oeuvre un dispositif photosensible et indicateur de position, tel que par exemple une caméra CCD. Celle-ci est couplée par le biais d'un miroir plan et un objectif au plan constitué par le décaleur en longueur d'onde. Au sein du dispositif à transfert de charges, l'intensité lumineuse locale est convertie en charges électriques pour chacun des pixels, la quantité de charges de chaque pixel étant proportionnelle à la quantité de lumière émise au niveau de la zone correspondante du décaleur en longueur d'onde lui-même exposé à la lumière Cerenkov. L'image électronique pixelisée est ensuite stockée dans une mémoire associée d'une unité de traitement de signal. La caméra CCD peut utilement être associée à un intensificateur d'image destiné a améliorer la sensibilité de la caméra

Par ailleurs, la matrice de la caméra CCD peut être refroidie pendant la prise d'informations, jusqu'à une température voisine de - 100 °C, de telle sorte à réduire le bruit thermique provenant des composants semi-conducteurs, et partant permettant d'améliorer la sensibilité et la gamme dynamique de détection.

**Revendications**

1. Procédé pour détecter et analyser l'interaction de rayons gamma ou de rayons X avec un objet à étudier, comme un patient, **caractérisé en ce qu'**il comprend les étapes suivantes:

   positionner après l'objet à étudier soumis à l'irradiation des rayons un premier matériau susceptible d'émettre, sous l'action du rayonnement émergent dudit objet, des particules chargées de hautes énergies;
   - interposer sur le trajet desdites particules un second matériau susceptibles d'émettre après interaction avec lesdites particules un rayonnement Cerenkov, l'indice de réfraction du second matériau étant sélectionné de manière à ne permettre un rayonnement Cerenkov que pour un seuil énergétique déterminé desdites particules et à éliminer toute contribution du rayonnement diffusé;
   - détecter le rayonnement Cerenkov et sa répartition spatiale;
   - analyser le rayonnement détecté.

2. Procédé selon la revendication 1, **caractérisé en ce que** le rayonnement Cerenkov subit un décalage en longueur d'onde, de manière à le transférer dans le domaine du visible, préalablement à sa détection par le détecteur de photons.

3. Système d'imagerie radiographique, destiné à restituer en temps réel une ou plusieurs images représentatives d'un objet ou d'un patient subissant une irradiation localisée, comprenant un accélérateur de particules destiné à générer un faisceau de photons X ou gammas, un détecteur des particules résultant de l'interaction desdits photons avec l'objet ou le patient irradié, et un organe d'interprétation de la détection ainsi réalisée, dans lequel le détecteur comprend

   - un convertisseur (7) desdits rayons incidents en électrons à forte énergie générés par le phénomène de création de paires et effet Compton par suite de l'interaction du matériau constitutif dudit convertisseur;
   - un émetteur de photons par effet Cerenkov (11) sous l'action des électrons énergétiques provenant du convertisseur (7), ledit émetteur étant accolé au convertisseur;
   - un organe de détection (20) sensible aux photons émis et capable de restituer spatialement la densité d'émission de photons Cerenkov provenant dudit émetteur Cerenkov.

4. Système selon la revendication 3, **caractérisé en ce que** le convertisseur (7) est constitué d'un matériau à nombre atomique élevé, choisi dans le groupe comprenant la tungstène, le plomb, le cuivre, seul ou sous forme d'alliage.

5. Système selon la revendication 4, **caractérisé en ce que** l'épaisseur du convertisseur (7) est comprise entre 0,1 et 20 millimètres.

6. Système selon l'une des revendications 3 à 5, **caractérisé en ce que** l'émetteur Cerenkov (11) est constitué d'un matériau optiquement transparent présentant un indice de réfraction supérieur à 1, et choisi dans le groupe comprenant le fluorure de calcium, le fluorure de sodium, le fluorure de lithium, le fluorure de magnésium, la silice naturelle ou synthétique, les aérogels de silice, l'eau et le Fréon, ou le quartz, par exemple.

7. Système selon la revendication 6, **caractérisé en ce que** l'émetteur Cerenkov (11) est constitué par un faisceau de fibres optiques parallèles (13) séparées optiquement les unes des autres, et noyée chacune dans une fine couche d'un matériau métallique lourd (14), lesdites fibres optiques étant orientées perpendiculairement à la direction incidente principale des photons à détecter.

8. Système selon la revendication 6, **caractérisé en ce que** l'émetteur Cerenkov (11) est constitué d'une plaque monocouche ou multicouches ou d'une plaque de fibres optiques.

9. Système selon l'une des revendications 3 à 8, **caractérisé en ce qu'**il comprend en outre, interposé entre l'émetteur de photons Cerenkov et l'organe de détection, une couche d'un matériau (17) destiné à décaler la longueur d'onde des photons Cerenkov ainsi émis dans le domaine du visible.

10. Système selon la revendication 9, **caractérisé en ce que** le décaleur en longueur d'onde (17) est réalisé en un matériau choisi dans le groupe comprenant le salicilate de sodium, le p-Terphényl, de diphenyl-oxazole (PPO), le tétraphenyl-butadiène (TPB), le p-quaterphenyl (PQ), le diphenylstilbène (DPS), le trans stilbène, le diphenylbutadiène (DPB), le phénylène phenyloxazole (POPOP), le Bis(2-methylstyryl) benzène (Bis-MSB), le benzimidazo-benziso-quinoline (BBQ) ou d'un mélange de plusieurs desdits matériaux.

11. Système selon l'une des revendications 9 et 10, **caractérisé en ce que** l'épaisseur de la couche constitutive du décaleur en longueur d'onde (17) est comprise entre 10 nanomètres et 500 micromètres.

12. Système selon l'une des revendications 8 à 11, **caractérisé en ce que** l'émetteur Cerenkov est constitué d'un empilement de plusieurs structures unitaires (18), constituée chacune d'une plaque (19) d'une couche émettrice Cerenkov revêtue en face avale d'une couche (17) de décaleur en longueur d'onde.

13. Système selon l'une des revendications 3 à 12, **caractérisé en ce que** l'organe de détection (20) est choisi dans le groupe comprenant soit une caméra à dispositif de transfert de charge (CCD) munie ou non d'un dispositif d'intensification de l'image, soit une matrice d'éléments photosensibles, ledit organe étant couplé optiquement par le biais d'un miroir et d'un objectif ou d'un faisceau de fibres optiques à l'émetteur Cerenkov ou au décaleur de longueur d'onde.

14. Système selon la revendication 3, **caractérisé en ce qu'**il est destiné à moduler le flux des rayons gammas ou X de sorte que ce flux modulé n'irradie qu'une partie de la surface de la cible.

15. Système selon la revendication 3, **caractérisé en ce qu'**il est destiné à mesurer la distribution surfacique des flux des rayons gammas ou des rayons X absorbés par la cible étudiée.

**Patentansprüche**

1. Verfahren zur Erfassung und Untersuchung der Wechselwirkung von Gamma- oder Röntgenstrahlen mit einem zu beobachtenden Objekt, wie etwa einem Patienten, **dadurch gekennzeichnet, dass** es folgende Schritte umfasst:

   - Anordnen nach dem zu untersuchenden Objekt, das der Bestrahlung durch die Strahlen ausgesetzt wird, eines ersten Materials, das unter der Einwirkung der von dem Objekt ausgehenden Strahlung hochenergetisch geladene Teilchen emittieren kann;
   - Dazwischenstellen auf dem Weg der Teilchen eines zweiten Materials, das nach der Wechselwirkung mit den Teilchen eine Cerenkov-Strahlung emittieren kann, wobei der Brechungskoeffizient des zweiten Materials derart gewählt wird, dass er eine Cerenkov-Strahlung nur für eine bestimmte energetische Schwelle der Teilchen zulässt und jeglichen Beitrag der ausgebreiteten Strahlung beseitigt;
   - Erfassen der Cerenkov-Strahlung und ihrer räumlichen Verteilung;
   - Untersuchen der erfassten Strahlung.

2. Verfahren nach Anspruch 1, **dadurch gekennzeichnet, dass** die Cerenkov-Strahlung derart eine Wellenlängenverschiebung erfährt, dass sie in den sichtbaren Bereich übertragen wird, ehe sie von dem Photonendetektor erfasst wird.

3. Röntgenbilddarstellungssystem zur Wiedergabe in Echtzeit eines oder mehrerer Bilder, die ein Objekt oder einen Patienten darstellen, das bzw. der einer lokalen Bestrahlung ausgesetzt wird, umfassend einen Teilchenbeschleuniger zum Erzeugen eines Röntgen- oder Gammaphotonenbündels, einen Teilchendetektor, der sich aus der Wechselwirkung der Photonen mit dem bestrahlten Objekt oder Patienten ergibt, und ein Organ zur Auswertung der derart ausgeführten Erfassung, wobei der Detektor folgendes umfasst

   - einen Wandler (7) der einfallenden Strahlen in hochenergetische Elektronen, die durch Paarbildung und Compton-Effekt auf die Wechselwirkung des Bestandsmaterials des Wandlers hin erzeugt werden;
   - einen Photonenemitter mit Cerenkov-Effekt (11) unter Einwirkung der energetischen Elektronen, die aus dem Wandler (7) stammen, wobei der Emitter an den Wandler angehängt ist;
   - ein Erfassungsorgan (20), das auf die emittierten Photonen anspricht und räumlich die Emissionsdichte der aus dem Cerenkov-Emitter stammenden Cerenkov-Photonen wiedergeben kann.

4. System nach Anspruch 3, **dadurch gekennzeichnet, dass** der Wandler (7) aus einem Material mit einer hohen Atomzahl besteht, das aus der Gruppe gewählt wird, zu der Wolfram, Blei, Kupfer, alleine oder als Legierung, gehören.

5. System nach Anspruch 4, **dadurch gekennzeichnet, dass** die Dicke des Wandlers (7) zwischen 0,1 und 20 Millimetern liegt.

6. System nach einem der Ansprüche 3 bis 5, **dadurch gekennzeichnet, dass** der Cerenkov-Emitter (11) aus einem optisch durchsichtigen Material besteht, das einen Brechungskoeffizienten von mehr als 1 aufweist und aus der Gruppe gewählt wird, zu der z.B. Kalziumfluorid, Natriumfluorid, Lithiumfluorid, Magnesiumfluorid, natürliches oder künstliches Siliziumdioxid, Aerogele aus Siliziumdioxid, Wasser und Freon oder Quarz gehören.

7. System nach Anspruch 6, **dadurch gekennzeichnet, dass** der Cerenkov-Emitter (11) aus einem Bündel paralleler Glasfasern (13) besteht, die optisch voneinander getrennt sind, und jeweils in eine dünne Schicht eines Schwermetallmaterials (14) eingelassen sind, wobei die Glasfasern rechtwinklig zu der Haupteinfallsrichtung der zu erfassenden Photonen ausgerichtet sind.

**8.** System nach Anspruch 6, **dadurch gekennzeichnet, dass** der Cerenkov-Emitter (11) aus einer Ein- oder Mehrschichtplatte oder einer Glasfaserplatte besteht.

**9.** System nach einem der Ansprüche 3 bis 8, **dadurch gekennzeichnet, dass** es außerdem zwischen dem Cerenkov-Photonenemitter und dem Erfassungsorgan angeordnet eine Materialschicht (17) umfasst, die dazu dient, die Wellenlänge der derart emittierten Cerenkov-Photonen in den sichtbaren Bereich zu verschieben.

**10.** System nach Anspruch 9, **dadurch gekennzeichnet, dass** der Wellenlängenschieber (17) aus einem Material hergestellt wird, das aus der Gruppe gewählt wird, zu der Natriumsalicylat, p-Terphenyl, Diphenyloxazol (PPO), Tetraphenylbutadien (TPB), p-Quaterphenyl (PQ), Diphenylstilben (DPS), Transstilben, Diphenylbutadien (DPB), Phenylenphenyloxazol (POPOP), Bis(2-methylstyrol)benzol (Bis-MSB), Benzimidazobenzisochinolin (BBQ) oder eine Mischung aus mehreren dieser Materialien gehören.

**11.** System nach einem der Ansprüche 9 und 10, **dadurch gekennzeichnet, dass** die Dicke der Bestandsschicht des Wellenlängenschiebers (17) zwischen 10 Nanometern und 500 Mikrometern liegt.

**12.** System nach einem der Ansprüche 8 bis 11, **dadurch gekennzeichnet, dass** der Cerenkov-Emitter aus einem Stapel mehrerer einheitlicher Strukturen (18) besteht, die jeweils aus einer Platte (19) einer Cerenkov-Emitterschicht bestehen, die auf der nachgelagerten Seite mit einer Wellenlängenschieberschicht (17) überzogen ist.

**13.** System nach einem der Ansprüche 3 bis 12, **dadurch gekennzeichnet, dass** das Erfassungsorgan (20) aus der Gruppe gewählt wird, zu der entweder eine Kamera mit Charge-Coupled-Device (CCD), die mit einer Bildverstärkungsvorrichtung versehen ist oder nicht, oder eine Matrize von lichtempfindlichen Elementen gehört, wobei das Organ optisch über einen Spiegel oder ein Objektiv oder ein Glasfaserbündel mit dem Cerenkov-Emitter oder dem Wellenlängenschieber gekoppelt ist.

**14.** System nach Anspruch 3, **dadurch gekennzeichnet, dass** es dazu dient, den Fluss der Gamma- oder Röntgenstrahlen derart zu modulieren, dass dieser modulierte Fluss nur einen Teil der Zieloberfläche bestrahlt.

**15.** System nach Anspruch 3, **dadurch gekennzeichnet, dass** es dazu gedacht ist, die flächenbezogene Verteilung der Flüsse der von dem beobachteten Ziel absorbierten Gamma- oder Röntgenstrahlen zu messen.

## Claims

**1.** Method for detecting and analysing the interaction of gamma-rays or X-rays with an object to be studied, such as a patient, **characterized in that** it comprises the following steps:

- positioning, behind the object to be studied, being subjected to the irradiation of the rays, a first material capable of emitting, under the action of the radiation emerging from the said object, high-energy charged particles;
- interposing, in the path of the said particles, a second material capable of emitting, after interaction with the said particles, Cerenkov radiation, the refractive index of the second material being selected so as to allow Cerenkov radiation only for a defined energy threshold of the said particles and to eliminate any contribution from the scattered radiation;
- detecting the Cerenkov radiation and its spatial distribution; and
- analysing the radiation detected.

**2.** Method according to Claim 1, **characterized in that** the Cerenkov radiation undergoes a wavelength shift so as to transfer it into the visible range, prior to its detection by the photon detector.

**3.** Radiographic imaging system intended to display, in real time, one or more images representative of an object or of a patient subjected to localized irradiation, comprising a particle accelerator for generating a photon (X-ray or gamma-ray) beam, a detector for detecting the particles resulting from the interaction of the said photons with the object or patient irradiated, and a unit for interpreting the detection thus effected, in which the detector comprises:

- a converter (7) that converts the said incident rays into high-energy electrons generated by the phenomenon of pair creation and the Compton effect as a result of the interaction of the constituent material of the said converter;
- a Cerenkov emitter (11) emitting photons by the Cerenkov effect under the action of the high-energy electrons coming from the converter (7), the said emitter being placed beside the converter; and
- a detection member (20) sensitive to the emitted photons and capable of spatially reproducing the density of Cerenkov photon emission coming from the said Cerenkov emitter.

**4.** System according to Claim 3, **characterized in that** the converter (7) is made of a material having a high atomic number, chosen from the group comprising tungsten, led and copper, by itself or in the form of an alloy.

**5.** System according to Claim 4, **characterized in that** the thickness of the converter (7) is between 0.1 and 20 millimetres.

**6.** System according to one of Claims 3 to 5, **characterized in that** the Cerenkov emitter (11) is made of an optically transparent material having a refractive index of greater than 1, and chosen from the group comprising calcium fluoride, sodium fluoride, lithium fluoride, magnesium fluoride, natural or synthetic silica, silica aerogels, water and Freon, or quartz, for example.

**7.** System according to Claim 6, **characterized in that** the Cerenkov emitter (11) is formed by a bundle of parallel optical fibres (13) optically separated from one another and each embedded in a thin layer of a heavy metallic material (14), the said optical fibres being oriented perpendicular to the main incident direction of the photons to be detected.

**8.** System according to Claim 6, **characterized in that** the Cerenkov emitter (11) is formed from a monolayer or multilayer sheet or from a sheet of optical fibres.

**9.** System according to one of Claims 3 to 8, **characterized in that** it furthermore includes, interposed between the Cerenkov photon emitter and the detection member, a layer (17) of a material intended to shift the wavelength of the Cerenkov photons thus emitted into the visible range.

**10.** System according to Claim 9, **characterized in that** the wavelength shifter (17) is made of a material chosen from the group comprising sodium salicylate, p-terphenyl, diphenyloxazole (PPO), tetraphenylbutadiene (TPB), *p*-quaterphenyl (PQ), diphenyl-stilbene (DPS), trans-stilbene, diphenylbutadiene (DPB), phenylene phenyloxazole (POPOP), bis(2-methyl-styryl)benzene (bis-MSB), benzimidazo-benzisoquinoline (BBQ) or a mixture of several of the said materials.

**11.** System according to either of Claims 9 and 10, **characterized in that** the thickness of the layer constituting the wavelength shifter (17) is between 10 nanometres and 500 micrometres.

**12.** System according to one of Claims 8 to 11, **characterized in that** the Cerenkov emitter is formed from a stack of several individual structures (18), each formed from a sheet (19) of a Cerenkov-emitting layer coated on the downstream face with a wavelength-shifting layer (17).

**13.** System according to one of Claims 3 to 12, **characterized in that** the detection member (20) is chosen from the group comprising either a camera based on a charge coupled device (CCD) possibly provided with an image intensifier, or a matrix of photosensitive elements, the said member being optically coupled by means of a mirror and an objective or a fibre-optic bundle to the Cerenkov emitter or to the wavelength shifter.

**14.** System according to Claim 3, **characterized in that** it is intended to modulate the flux of gamma-rays or X-rays so that this modulated flux irradiates only part of the surface of the target.

**15.** System according to Claim 3, **characterized in that** it is designed to measure the surface distribution of the flux of gamma-rays or X-rays absorbed by the target under study.

<u>Salle de traitement</u>　　　<u>Pupitre de commande</u>

Fig. 1

**Fig. 2**

Fig. 4

Fig. 3

Fig. 5